Europäisches Patentamt

(19) European Patent Office

Office européen des brevets

(11) Publication number: **0 104 918**
**A2**

(12) **EUROPEAN PATENT APPLICATION**

(21) Application number: **83305710.2**

(22) Date of filing: **26.09.83**

(51) Int. Cl.³: **A 01 G 1/04**

(30) Priority: **28.09.82 GB 8227624**

(43) Date of publication of application:
**04.04.84 Bulletin 84/14**

(84) Designated Contracting States:
**BE DE FR GB LU NL**

(71) Applicant: **Tan, Kok Kheng**
**Department of Biochemistry National University of**
**Singapore(SG)**

(71) Applicant: **EVERBLOOM MUSHROOMS (PTE) LTD.**
**2401 Tong Eng Building 101 Cecil Street**
**Singapore 0106(SG)** -

(72) Inventor: **Tan, Kok Kheng Department of Biochemistry**
**National University of Singapore**
**Singapore(SG)**

(74) Representative: **Perry, Robert Edward et al,**
**GILL JENNINGS & EVERY 53-64 Chancery Lane**
**London WC2A 1HN(GB)**

(54) **Cell cultivation substrate.**

㊗ A process for preparing a substrate suitable for cell
cultivation thereon, comprises subjecting cotton to mechanical attrition in the presence of water, and shredding the
hydrated cotton. The shredded cotton can be mixed with
nutrient, sterilised and used as a mushroom spawn growth
or cultivation substrate.

EP 0 104 918 A2

## CELL CULTIVATION SUBSTRATE

Cotton waste has been used for the cultivation of the padi-straw mushrooms, <u>Volvariella volvacea</u>, as disclosed by Chang, The Mushroom Journal <u>21</u> (1974) 348-354. The cotton is hydrated by spraying water and stepping. The stepping presumably removes air trapped in the cotton, and allows water to soak into it.  After hydration, nutrients are added and the resulting "compost" is mixed, manually.  The procedure is laborious, messy, and quite unsuitable for making large quantities of cotton waste, one reason being non-uniform mixing.

According to the present invention, a process for preparing a substrate suitable for cell cultivation thereon, comprises subjecting cotton to mechanical attrition in the presence of water, and shredding the hydrated cotton.  The shredded product can be mixed with a nutrient on any suitable scale.  The nutrient--containing product can then be sterilised and innoculated with a culture to produce, say, mushroom spawn.

It is a feature of this invention that commercially--available apparatus can simply be used for the production of a useful product.  For example, the cotton, e.g. cotton waste, can be fed into an industrial washing machine or any other apparatus provided with means for causing water inflow and outflow, and preferably with a rotating action.  A conventional washing machine uses a soaking and then a spin cycle, and these can be used, in the process of the invention, to provide the necessary attrition, followed by removal of excess water. It is preferred that the cotton waste should be hydrated to from 2 to 5, preferably 3 to 4, times the dry weight of the waste.

The hydrated cotton may then be passed, manually or by conveyor, to shredding apparatus.  The cotton is then shredded, and the cotton fibres are drawn.  The pieces of cotton waste may then be introduced into a mixer, e.g. a concrete mixer or a horizontal batch mixer with an auger mixing device.

Nutrient and/or filler and/or absorbent and/or fibrous material may then be added. An example of a nutrient is rice bran, e.g. in an amount of up to 20% by weight, based on the dry weight of the cotton. Sawdust may be added in an amount of up to 50% on the same w/w basis.

After mixing, the cotton pieces may be filled into polypropylene bags and compressed. The bags are then stoppered and sterilised, e.g. with steam in an autoclave at 120 to 140°C for 2-4 hours. Mushroom spawn can then be introduced when the sterilised substrate is cool.

The procedure described above has been found to be very suitable for the cultivation of Pleurotus cystidiosus (P. abalonus), P. ostreatus (both grey and white types), P. cornucopiae, P. sajor caju, Ganoderma lucidum and Coriolus versicolor.

The process of this invention allows large quantities of cell growth substrate to be prepared from cheap materials, quickly and simply. The mechanical attrition and excess water removal steps can take less than 60 and 10, often less than 30 and 5 minutes, respectively, as exemplified below, to give the desired degree of hydration. The shredding stage can also be short but effective.

The following Example illustrates the invention.

Example

10 kg of raw cotton waste, dropping grade or "card-fly" grade, are placed in an industrial washing machine. Water is added and the wash cycle turned on. When the cotton waste is completely soaked, after about 10 min. of washing action, excess water is removed, using the spin cycle, for 30 sec. The hydrated cotton waste is then shredded by a mechanical shredder. The cotton shreds are

3

introduced into a concrete mixer. 0.5 kg rice bran is added and mixed for 5-10 min. Water is added if hydration is less than 3 to 4 times the dry weight of the cotton. After mixing, the cotton pieces are filled into polypropylene bags 90 to 105 mm in diameter. Each bag holds about 1.2 kg of wet cotton mixture. The bag is compressed to a height of 150-210 mm by a pneumatic plunger. Each bag of cotton mixture is then stoppered by a heat-resistant foam plug and steam sterilised for 2 hours at 121°C. The sterilised bags of cotton mixture are cooled and mushroom spawn of <u>Pleurotus</u> <u>ostreatus</u> or <u>P</u>. <u>cystidiosus</u> added aseptically in a sterile cabinet. The inoculated cotton mixture is then incubated for 5-7 weeks before placing in a growing house to produce mushrooms.

4

CLAIMS

1.  A process for preparing a substrate suitable for cell cultivation thereon, which comprises subjecting cotton to mechanical attrition in the presence of water, and shredding the hydrated cotton.

2.  A process according to claim 1, in which the cotton is cotton waste.

3.  A process according to claim 1 or claim 2, in which the cotton is subjected to rotatory action in the presence of water.

4.  A process according to any preceding claim, in which excess water is removed after the attrition, and before the shredding, stage.

5.  A process according to any preceding claim, in which the hydrated cotton contains from 2 to 5 times its own dry weight of water.

6.  A process according to any preceding claim, in which the shredded cotton is mixed with a cell nutrient.

7.  A process according to any preceding claim, in which the shredded cotton is sterilised.

8.  A process according to claim 7, in which the sterilised cotton is used as a substrate for the growth of mushroom spawn and/or the cultivation of mushrooms.

9.  A process according to claim 8, in which the mushroom species is selected from <u>Pleurotus</u> <u>cystidiosus</u>, <u>P.</u> <u>ostreatus</u>, <u>P.</u> <u>cornucopiae</u>, <u>P.</u> <u>sajor</u> <u>caju</u>, <u>Ganoderma</u> <u>lucidum</u> and <u>Coriolus</u> <u>versicolor</u>.